# EUROPÄISCHE PATENTSCHRIFT

(11) **EP 0 438 063 B1**
(45) Veröffentlichungstag und Bekanntmachung des Hinweises auf die Patenterteilung: **01.06.1994**
(21) Anmeldenummer: 91100156.8
(22) Anmeldetag: 05.01.1991
(51) Int. Cl.: A23N 1/02, A23N 1/00, B30B 9/20, C12G 1/02

(54) **Verfahren und Vorrichtung zum Zerkleinern von Früchten, insbesondere von Weintrauben**
Method and apparatus for crushing of fruit, in particular of grapes
Procédé et dispositif pour broyer des fruits, en particulier des raisins

(30) Priorität: 16.01.1990 DE 4001001
(43) Veröffentlichungstag der Anmeldung: 24.07.1991
(73) Patentinhaber: Wahnschaffe, Georg Wilhelm, D-47533 Kleve (DE)
(72) Erfinder: Wahnschaffe, Georg Wilhelm, D-47533 Kleve (DE)
(74) Vertreter: Jackisch-Kohl, Anna-Katharina

(56) Entgegenhaltungen:
- AT-B- 330 074
- DE-A- 2 015 130
- FR-A- 420 314
- FR-A- 792 089
- FR-A- 811 552
- FR-A- 967 072
- US-A- 1 447 995
- US-A- 2 010 467
- US-A- 2 398 440
- US-A- 3 935 317

## Beschreibung

Die Erfindung betrifft eine Vorrichtung zum Zerkleinern von Früchten, insbesondere von Weintrauben, nach dem Oberbegriff des Anspruches 1.

Bei vielen Früchten befinden sich die geschmacksbildenden Stoffe oder ein Teil von ihnen in den Zellen der Schale oder der Haut. Man kann diese Stoffe dadurch freisetzen, daß man die Schale und damit auch die Zellen in einem Messer- oder Mahlwerk mechanisch zerkleinert. Dabei treten aber zum Teil unerwünschte Trubprobleme auf. Außerdem werden auf diese Weise auch die Kerne der Früchte zerkleinert, sofern diese nicht zuvor entfernt wurden, und damit Stoffe freigesetzt, die den Geschmack des Früchtebreies beeinträchtigen.

Im Falle von Weintrauben verzichtet man deshalb auf diese Art von mechanischer Zerkleinerung. Stattdessen werden die Weintrauben lediglich mit einer Traubenmühle leicht zerdrückt, so daß der Saft heraustreten kann.

Bei der gattungsgemäßen Vorrichtung (AT-B-330 074) werden die Weintrauben zwischen zwei walzenförmigen Quetschteilen hindurchgeführt, die über den Umfang verteilt axial verlaufende Rippen aufweisen. Zwischen den Rippen werden Aufnahmen gebildet, die den Fruchtinhalt beim Quetschen der Früchte zwischen den Quetschteilen aufnehmen. Die Rippen haben teilkreisförmigen Querschnitt, so daß die Früchte beim Durchgang zwischen den Quetschteilen nicht festgehalten werden. Dadurch besteht die Gefahr, daß die Früchte unzerquetscht zwischen den beiden Quetschteilen hindurchtreten.

Im übrigen wartet man ab, bis die Haut der Zellen der Weintrauben durch chemische Prozesse während und nach der Gärung sowie durch die mechanische Bearbeitung des Traubenbreies während dieser Zeit zerstört wird und die Zellinhaltsstoffe von allein austreten.

Aber auch weißer und roter Wein, den man aus Beeren bereitet, die man vor der Gärung einer Explosionszerkleinerung unterzogen hat, weist Eigenschaften auf, die zumindest bei einem Teil der Konsumenten sehr erwünscht sind. Weißer Wein schmeckt voller und runder und ist auch deutlich aromatischer. Roter Wein hat eine intensivere Farbe und einen kräftigeren Geruch. Im Mund erscheint er weniger adstringend, runder und weniger sauer, was auch vergleichende Analysen widerspiegeln. Darüberhinaus zeigen die Analysen auch, daß die Anthocyane, die für eine gute Alterung des Weines verantwortlich sind, bei Rotweinen, die mit diesem Verfahren bereitet worden sind, einen höheren Anteil haben als bei traditionell bereiteten Rotweinen.

Bei der Explosionszerkleinerung werden allerdings die Zellwände beim Austritt des Zellmaterials aus der Druckkammer durch den Innendruck nicht zum Platzen gebracht. Flüssigkeiten sind - anders als Gase - nahezu inkompressibel, so daß sich die Flüssigkeit einer Zelle, die unter hohem Außendruck gestanden hat, auch nicht ausdehnt, wenn der Druck weggenommen wird. Mithin besteht auch kein Grund, die Zellwände zu sprengen. Eine Sprengung der Zellwände nach einer Dekompression kann nur dann erfolgen, wenn sich durch den hohen Druck ein Druckgas verflüssigt hat, in die Zellen hineindiffundiert ist und nach der Dekompression wieder den gasförmigen Zustand annimmt. Dieser Prozeß vollzieht sich aber nur, wenn eine relativ dünne Zellbreischicht sehr hohen Drücken (mehr als 50 bar) längere Zeit, zum Beispiel 10 min lang, ausgesetzt ist. Wenn dennoch bei der Explosionszerkleinerung, wie Versuche gezeigt haben, das Zellmaterial aufgeschlossen wird, so ist dies darauf zurückzuführen, daß das komprimierte Gas als Treibmittel wirkt und den Früchtebrei aus dem Druckgefäß herausschleudert. Beim Verlassen des Druckzylinders berühren die Zellen die Wandungen des Druckzylinders sowie insbesondere die des Austrittsventils und prallen mit hoher Geschwindigkeit auf die Wandungen des Entspannungsgefäßes. Dadurch zerschleißen oder platzen sie.

Nach der Explosionszerkleinerung ist es schwieriger als bei konventionellen Verfahren, zum Beispiel beim Aufschließen der Zellen im Maischegärverfahren, die festen Teile von der Flüssigkeit des Früchtebreies zu separieren. Die festen Teile wirken wie ein Schwamm und lassen weniger Flüssigkeit ablaufen, als es beispielsweise der Tresterhut bei der Weinbereitung tut. Dies ist darauf zurückzuführen, daß die einzelnen Teile der zerstörten Zellwände insgesamt eine größere Oberfläche haben als die Zelle, zu der sie vorher gehörten. Dadurch wirkt auch die Adhäsionskraft auf die sie umgehende Flüssigkeit wesentlich stärker.

Um diesem Problem zu begegnen, werden die festen Teile ausgepreßt. Dieses Pressen verursacht aber nicht nur Kosten, sondern kann sich auch nachteilig auf die Qualität des Fruchtsaftes auswirken, weil dadurch unerwünschte Stoffe, zum Beispiel Gerbstoffe aus den Kernen von Beeren, in den Fruchtsaft gelangen. Bei der Bereitung von hochwertigen Weinen, bei der man auf die Verwendung von Preßsäften grundsätzlich verzichtet, hat man wegen dieses Schwammeffektes bei Anwendung der Explosionszerkleinerung eine niedrigere Ausbeute als sonst.

Ein weiterer Nachteil der Explosionszerkleinerung ist, daß auch bei der weiteren Verarbeitung der Fruchtsaft trüber ist als Saft, der auf konventionelle Weise gewonnen wird. Diese Trübung ist auf freischwebende Partikel aus den Zellwänden zurückzuführen. Die Trübung kann nur durch zusätzliche Klär- und Filterungsvorgänge beseitigt werden. Das aber verursacht nicht nur zusätzliche Kosten, sondern beeinträchtigt auch die Qualität des Fruchtsaftes, denn durch jedes Filtern werden dem Fruchtsaft auch Aromen und sonstige gewünschte Inhaltsstoffe entzogen.

Nicht zuletzt wegen dieser Trubprobleme hat sich die Explosionszerkleinerung bisher noch nicht dort durchgesetzt, wo sie empfehlenswert erscheint, zum Beispiel bei der Fruchtsaft- und bei der Weinerzeugung.

Der Erfindung liegt die Aufgabe zugrunde, die gattungsgemäße Vorrichtung so auszubilden, daß die Früchte bei geringem Herstellungsaufwand und geringen Kosten so zerkleinert werden können, daß ohne Beeinträchtigung des Endproduktes eine hohe Ausbeute der Früchte erzielt werden kann.

Diese Aufgabe wird bei der gattungsgemäßen Vorrichtung erfindungsgemäß mit den kennzeichnenden Merkmalen des Anspruches 1 gelöst.

Mit der erfindungsgemäßen Vorrichtung werden die Zellwände der Früchte durch Quetschen gerade zum Platzen gebracht, nicht aber in eine Vielzahl von Partikeln zerkleinert. Aus der aufgerissenen Zelle können die Inhaltsstoffe einfach herausgespült werden und sich mit der sie umgehenden Flüssigkeit vermischen. Zwischen den beiden Quetschteilen werden die Früchte zerquetscht. Durch die Kanten zumindest des einen Quetschteiles werden die Früchte erfaßt und während des Quetschvorgangs festgehalten. Zwischen den Quetschteilen werden darum die festgehaltenen Früchte zuverlässig gequetscht, wobei sie platzen und ihr Inhalt (Fruchtfleisch und Kerne) aus der Haut herausgedrückt wird. Die einmal erfaßte Haut wird durch den Druck zwischen den Quetschteilen so stark gequetscht, daß auch ihre Zellen platzen. Das Fruchtfleisch und die Kerne werden in den Aufnahmen zumindest des einen Quetschteiles aufgenommen und mitgenommen. Wenn sich die Quetschteile weiter bewegen, fällt die Haut entweder von selbst in den Früchtebrei im Bereich unter den Quetschteilen, oder sie kann vorteilhaft durch einen Abstreifer von den Quetschteilen abgestreift werden. Im Fruchtbrei kann die schon vorhandene Flüssigkeit die Inhaltsstoffe aus den geplatzten Zellen herausspülen. Die entleerte Zellhülle hat, da sie verhältnismäßig groß ist, nur eine geringe Adhäsionskraft, so daß der Schwammeffekt, den die festen Bestandteile bei der bekannten Explosionszerkleinerung hervorrufen, wesentlich geringer ausfällt. Auch das Trubproblem ist infolge der erfindungsgemäßen Ausbildung zuverlässig gelöst, denn die nur aufgeplatzten, nicht jedoch zerkleinerten Zellhüllen sind schwer genug, um in der Flüssigkeit mit der Zeit abzusinken und dann separiert zu werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung den Quetschvorgang der Früchte unter Einsatz der erfindungsgemäßen Vorrichtung,
- Fig. 2 bis Fig. 7: in schematischen Darstellungen verschiedene Ausführungsformen von Quetschteilen der erfindungsgemäßen Vorrichtung.

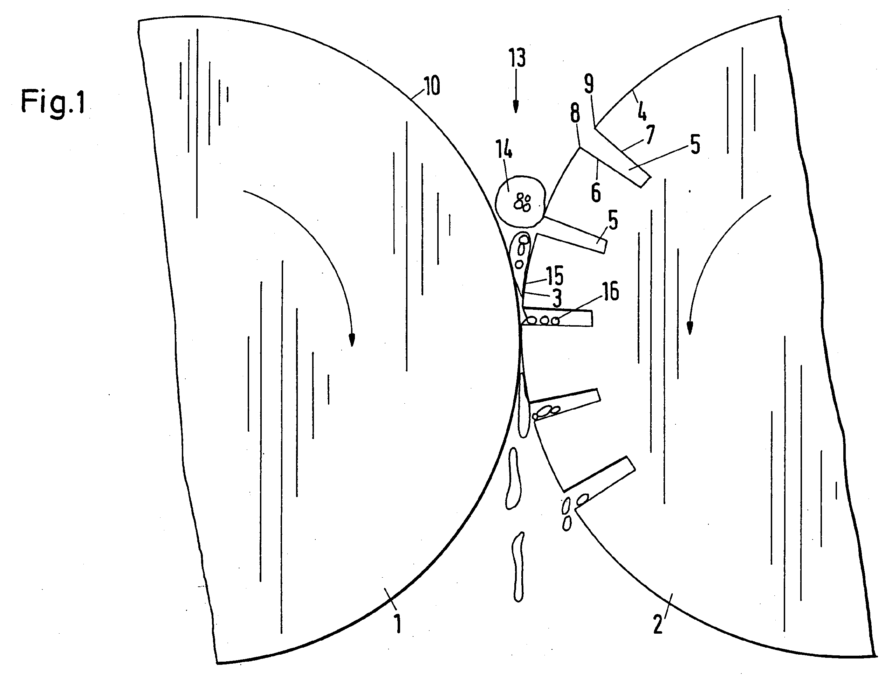

Die Vorrichtung gemäß Fig. 1 hat zwei drehbar angetriebene, achsparallele Walzen 1 und 2, die im Ausführungsbeispiel gegensinnig angetrieben werden. Die Walzen 1, 2 bilden zwischen sich einen Durchgang 3, liegen aber aneinander an. Zwischen den Walzen werden die zu zerkleinernden Früchte gerade zum Platzen gebracht. Um unterschiedliche Fruchtsorten verarbeiten zu können, kann zumindest die eine Walze, vorzugsweise jedoch beide Walzen, gegeneinander verstellt werden. Die Achsen der Walzen 1, 2 können gefedert, aber auch ungefedert gelagert sein.

Die beiden Walzen 1, 2 sind durch Zylinder gebildet, von denen in der Mantelfläche 4 der Walze 2 nutförmige Aufnahmen 5 eingearbeitet sind. Sie erstrecken sich vorteilhaft über die gesamte Länge der Walze 2. Diese Aufnahmen nehmen während des Quetschvorganges die aus den Früchten herausgedrückten Fruchtkerne und das Fruchtfleisch auf. Die nutförmigen Aufnahmen 5 haben im Ausführungsbeispiel nach Fig. 1 rechteckigen Querschnitt. Am Übergang von den Nutwänden 6, 7 zur Mantelfläche 4 werden Kanten 8 und 9 gebildet, die Festhalteabschnitte bilden, mit denen die Fruchthaut während des Quetschvorganges festgehalten wird.

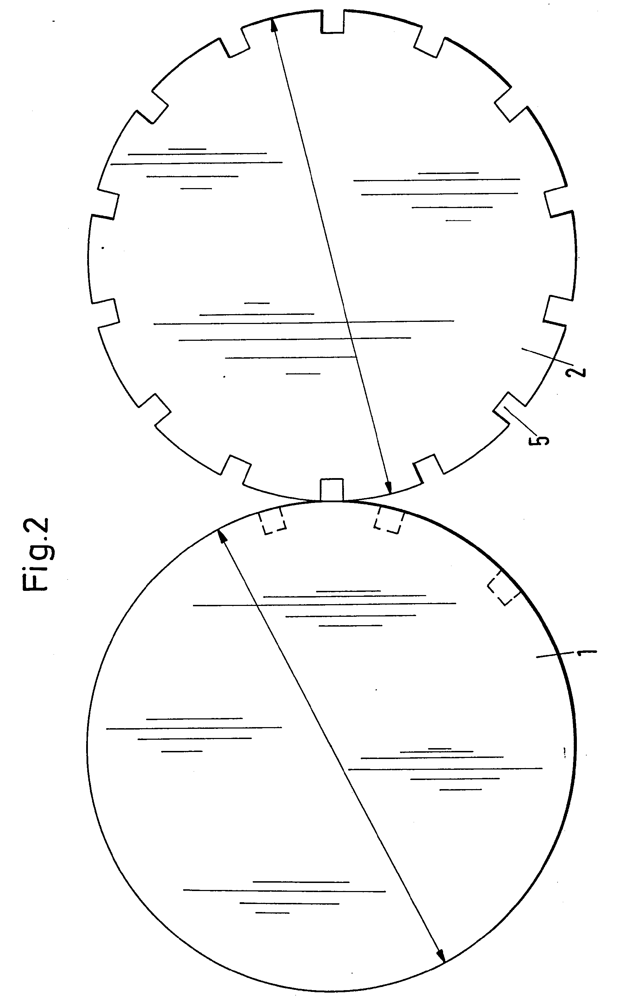

Die andere Walze 1 hat eine glatte Mantelfläche 10. Sie kann aber ebenfalls nutförmige Aufnahmen aufweisen, die dann jedoch in bezug auf die Aufnahmen 5 der Walze 2 derart versetzt angeordnet sind, daß im Quetschbereich der Aufnahme 5 der einen Walze jeweils ein Teil der Mantelfläche der anderen Walze gegenüberliegt, so daß die Früchte zwischen den Walzen zuverlässig gequetscht werden können. Dies ist in Fig. 2 mit gestrichelten Linien für die Quetschteiles 1 schematisch dargestellt.

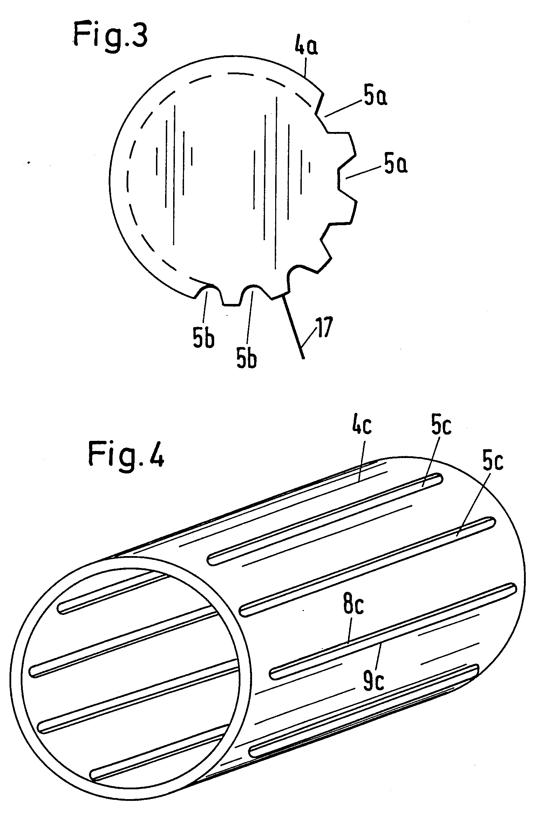

Wie Fig. 3 zeigt, können die nutförmigen Aufnahmen 5a nicht nur rechteckigen, sondern auch trapezförmigen Querschnitt aufweisen. Die Aufnahmen 5a erweitern sich somit nach außen bis zur Mantelfläche 4a der Walze.

In Fig. 3 ist ferner noch angedeutet, daß die nutförmigen Aufnahmen 5b auch teilkreisförmigen Querschnitt haben können. Auch dadurch wird erreicht, daß sich diese Aufnahmen 5b in Richtung auf die Mantelfläche der Walze verbreitern. Die Walzen können durchweg trapezförmige oder teilkreisförmige Aufnahmen 5a bzw. 5b aufweisen. Es ist aber durchaus auch möglich, an der Walze beide Arten von Aufnahmen vorzusehen. Da sich die Aufnahmen 5a, 5b radial nach außen erweitern, besteht nicht die Gefahr, daß sich in ihnen vertrocknete und verhärtete Früchte und Kerne festsetzen, die den Quetschvorgang beeinträchtigen würden. Da die Aufnahmen 5a, 5b an der Walzenoberfläche breiter sind als an ihrem Boden, können die Früchte und Kerne zuverlässig aus den Aufnahmen herausfallen.

Selbstverständlich können die nutförmigen Aufnahmen 5a, 5b auch jede andere geeignete Querschnittsform haben, die jedoch so ausgestaltet sein muß, daß die in ihnen befindlichen Früchte, Kerne und Fruchtfleisch zuverlässig herausfallen können.

Fig. 4 zeigt eine Möglichkeit, die Quetschteiles aus einem Rohr herzustellen, das axial verlaufende Schlitze 5c aufweist. Durch die Schlitze 5c werden in der Mantelfläche 4c der Walze scharfe Kanten 8c, 9c gebildet, die wiederum die Festhalteabschnitte bilden, mit denen die Fruchthaut im Quetschbereich während des Quetschvorganges festgehalten wird. Die aus der Fruchthaut herausgepreßten Kerne und das Fruchtfleisch gelangen in den jeweiligen Schlitzspalt, aus dem sie beim Weiterdrehen der Walze nach außen in den Fruchtbrei fallen können.

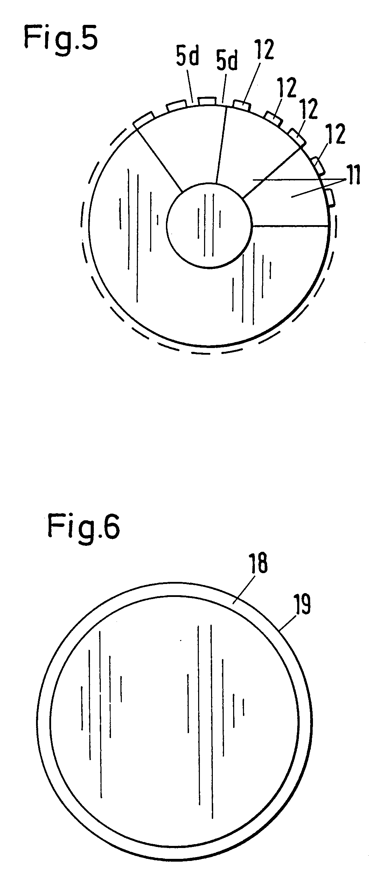

Beim Ausführungsbeispiel gemäß Fig. 5 besteht die Walze aus mehreren Segmentträgern 11, die zur Walze zusammengesetzt sind und an ihrer Außenseite mit Abstand voneinander liegende Mantelsegmente 12 tragen, welche zwischen sich die nutförmigen Aufnahmen 5d bilden, die gleich ausgebildet sein können wie die nutförmigen Aufnahmen gemäß den Fig. 1 bis 3. Dies wird durch entsprechende Formgebung der Mantelsegmente 12 erreicht, wie in Fig. 5 schematisch dargestellt ist. Infolge der einzelnen Segmentträger 11 können beispielsweise bei Verschleiß einzelne Segmentträger oder auch nur einzelne Mantelsegmente 12 ausgewechselt werden, so daß nicht die gesamte Walze ersetzt werden muß.

Die nutförmigen Aufnahmen der Walzen müssen nicht axial verlaufen, sondern können selbstverständlich auch eine Steigung aufweisen oder gar wendelförmig verlaufen. Die nutförmigen Aufnahmen oder die Schlitze sind vorzugsweise mindestens so weit voneinander entfernt, daß eine plattgedrückte, vom jeweiligen Festhalteabschnitt festgehaltene Frucht nicht die nächste Aufnahme überlagert. Dadurch wird vermieden, daß eine Frucht nicht vollständig gequetscht wird. Würde sich eine im Quetschbereich zwischen den Walzen 1, 2 von den Festhalteabschnitten festgehaltene Fruchthaut bis zur nächsten Aufnahme erstrecken, dann würde die Fruchthaut beim Durchgang durch den Quetschbereich in diese Aufnahme hineingedrückt und dadurch nicht mehr gequetscht.

Andererseits sollte der Abstand der Aufnahmen auch nicht zu groß sein, weil in dem Bereich, in dem sich keine Aufnahmen befinden, die Früchte nicht erfaßt werden und die Quetschkapazität eines Walzenpaares mit zu großen Aufnahmeabständen ungenügend ist.

In Fig. 1 ist der Quetschvorgang der Früchte zwischen den beiden Walzen 1 und 2 schematisch dargestellt. Die Früchte 14 gelangen in Pfeilrichtung 13 in den Bereich zwischen die beiden Walzen 1 und 2. Infolge des keilförmig sich verjüngenden Bereiches werden die Früchte 14 zunehmend zusammengedrückt, bis sie vor Erreichen der Berührungsstelle zwischen den Walzen 1, 2 aufplatzen. Die aufgeplatzte Fruchthaut 15 bleibt an den Kanten 8 bzw. 9 der Aufnahmen 5 hängen und wird dadurch zuverlässig zwischen den Walzen 1, 2 gefördert. Das in der Frucht befindliche Fruchtfleisch bzw. die Fruchtkerne 16 werden beim Weiterdrehen der Walzen 1, 2 infolge des sich verjüngenden Quetschbereiches 3 aus der Fruchthaut 15 heraus in die jeweilige Aufnahme 5 gedrückt. Beim Durchgang durch die Berührungsstelle zwischen den Walzen 1, 2 wird die Haut, die durch die Kanten 8, 9 festgehalten wird, so stark gepreßt, daß auch ihre Zellen platzen. Nach dem Durchgang wird die gequetschte Fruchthaut 15 freigegeben, so daß sie von selbst nach unten in den Fruchtbrei fällt. Auch die in den Anfnahmen 5 befindlichen Fruchtkerne und das Fruchtfleisch werden infolge ihres Gewichtes oder infolge der Zentrifugalkraft nach dem Durchgang durch den Quetschbereich 3 herausbewegt, so daß sie ebenfalls nach unten in den Fruchtbrei fallen. Der Inhalt der Früchte wird beim Quetschvorgang durch die Walze 1 aus der Fruchthaut 15 herausgedrückt und in die jeweilige Aufnahme 5 hineingedrückt. Da die Walze 1 beim Ausführungsbeispiel nach Fig. 1 am Umfang keine nutförmigen Aufnahmen hat, werden die Früchte 14 an jeder Stelle des Umfanges der Walze 1 im Bereich des Walzenspaltes 3 in die Aufnahmen 5 der anderen Walze 1 gedrückt. Hat auch die Walze 1 nutförmige Aufnahmen 5, dann sind die Aufnahmen der beiden Walzen 1, 2 derart zueinander versetzt angeordnet, daß im Quetschbereich 3 die Aufnahme der einen Walze 1 einem Mantelfächenbereich der anderen Walze gegenüberliegt, in der sich keine Aufnahme befindet. Dadurch ist sichergestellt, daß auch bei Walzen, die beide Aufnahmen für den Fruchtinhalt aufweisen, die Früchte zuverlässig ausgequetscht werden können.

Die nutförmigen Aufnahmen der beschriebenen Walzen sollten gerade so groß sein, daß sie den Fruchtinhalt aufnehmen können. Sind sie größer, so vermindert sich unnötig die Quetschkapazität. Sind sie dagegen kleiner, so besteht beim Quetschvorgang die Gefahr, daß sich zwischen den Walzen Fruchtfleisch und Kerne stauen, weil sie nicht abtransportiert werden. Ohne die nutförmigen Aufnahmen würde der Fruchtinhalt, also das Fruchtfleisch und die Kerne, im Quetschbereich verbleiben, weil sie zu glatt sind, um von den Walzen erfaßt zu werden. Der Walzenspalt würde dadurch schnell verstopfen und der Quetschvorgang wäre blockiert.

In den Fällen, in denen sich die Fruchthaut nicht von selbst von den Walzen löst, ist vorteilhaft ein Abstreifblech 17 (Fig. 3) vorgesehen, das an der Mantelfläche der jeweiligen Walze anliegt und die hängenbleibende Fruchthaut von der Walze abstreift. Dieses Ableitblech 17 kann bei sämtlichen beschriebenen Ausführungsformen vorhanden sein.

Es ist möglich, daß insbesondere größere Früchte nicht leicht von den Festhalteabschnitten 8, 9 der Walzen erfaßt werden und daß sich dadurch die Durchgangsgeschwindigkeit vermindert. Darum können die Walzen auf ihrer Mantelfläche mit Profilen versehen sein, welche die Früchte erfassen und in die Aufnahmen drücken. Die Profile sollten kleiner als die Aufnahmen sein und auf der jeweiligen Walze so befestigt sein, daß sie an der Berührungsstelle der Walzen 1, 2 in der Aufnahme der gegenüberliegenden Walze verschwinden. Diese Profile können aus Metall und/oder Kunststoff und/oder Gummi und dgl. bestehen und sind auf einer oder auf beiden Walzen im Abstand der Anfnahmen auf der jeweils gegenüberliegenden Walze vorgesehen.

Wenn die Mantelfläche beider Walzen starr ist wie die von Metallwalzen, so wirkt sich der zwischen den Walzen bestehende Druck im Quetschbereich nur dort auf die Fruchthaut 15 aus, wo sich die meiste Fruchthaut befindet. An den übrigen Stellen wirkt sich dieser Druck nicht aus, so daß die in diesem Bereich befindlichen Fruchthäute nicht zerquetscht werden. Fig. 6 zeigt nun ein Ausführungsbeispiel, bei dem die Walze eine glatte Mantelfläche 18 hat, die aber dennoch den beschriebenen Quetschvorgang ermöglicht. Hierzu ist die Walze mit einem elastisch nachgiebigen Material, wie Kunststoff oder Gummi, beschichtet. Die Beschichtung 19 ist einerseits hart genug, um die Haut der Früchte und insbesondere deren Zellen zu zerquetschen. Andererseits ist diese Beschichtung 19 so weit elastisch, um die unregelmäßig dicken Fruchthäute bzw. -schalen passieren zu lassen und dabei dennoch auf die gesamten Fruchtschalen einen gleichmäßig hohen Druck auszuüben. Die Beschichtung 19 wird beim Durchgang der Früchte durch den Quetschbereich elastisch verformt, so daß sie auch unregelmäßig geformte Früchte aufnimmt, wobei die gesamte Fruchthaut 15 unter Druck gerät und alle Zellen platzen.

Da sich nicht nur in den Kernen der Früchte, sondern auch in deren Stielen Stoffe befinden, die den Geschmack des Fruchtsaftes stark beeinträchtigen, empfiehlt es sich, die Früchte vor dem Quetschvorgang auf die übliche Weise durch einen Entrapper zu entstielen. Die Quetschwalzen können unterhalb des Entrappers angeordnet sein, so daß der Entrapp- und der Quetschvorgang quasi in einem einzigen Arbeitsgang ohne kostspielige Zwischenlagerung und -transporte durchgeführt werden kann. Die vom Entrapper herunterfallenden entstielten Früchte gelangen in den Bereich zwischen die beiden Quetschwalzen, so daß die entstielten Früchte unmittelbar nach dem Entrappvorgang in der beschriebenen Weise gequetscht werden können.

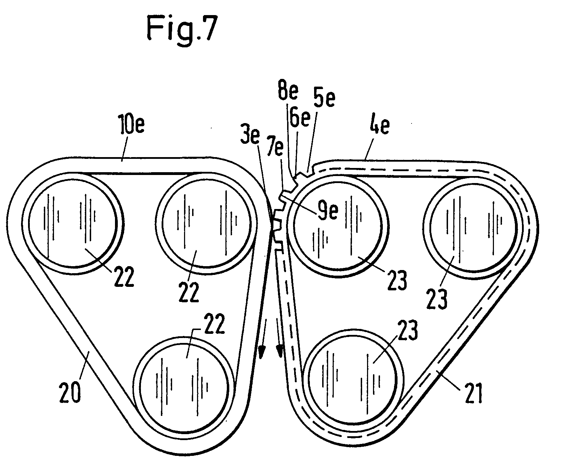

Fig. 7 zeigt ein Ausführungsbeispiel, bei dem die Quetschteile durch endlos umlaufende Riemen 20 und 21 gebildet sind. Sie sind im Ausführungsbeispiel jeweils über drei Walzen 22 und 23 geführt, von denen jeweils mindestens eine drehbar angetrieben ist. Die Walzen 22, 23 liegen parallel zueinander und sind in (nicht dargestellten) Gestellen drehbar gelagert. Wenigstens eine der Walzen 22 und 23 ist vorteilhaft als Spannwalze ausgebildet, mit der durch Verstellen quer zu ihrer Achsrichtung die Spannung des Riemens 20 bzw. 21 eingestellt werden kann. Die beiden Riemen 20, 21 werden in Richtung der Pfeile in Fig. 7 umlaufend angetrieben. Im Durchführbereich 3e berühren die Riemen 20 und 21 einander. Der Riemen 21 ist an seiner Umfangsfläche mit nutförmigen Vertiefungen 5e versehen, die gleiche Querschnittsform haben können wie die Aufnahmen der vorigen Ausführungsbeispiele. Am Übergang von den Seitenwänden 6e, 7e der Aufnahmen 5e zur Umfangsfläche 4e werden die als Kanten ausgebildeten Festhalteabschnitte 8e und 9e gebildet, mit denen die Fruchthaut in der beschriebenen Weise festgehalten wird. Die Aufnahmen 5e verlaufen parallel zueinander und parallel zu den Achsen der Walzen 23.

Der andere Riemen 20 hat eine glatte Umfangsfläche 10e, kann aber ebenfalls nutförmige Aufnahme aufweisen, die dann jedoch in bezug auf die Aufnahmen 5e des Riemens 21 versetzt angeordnet sind. Vorzugsweise verlaufen die Aufnahmen 5e parallel zu den Walzenachsen, jedoch können sie auch einen Steigungswinkel aufweisen, d.h. unter einem von 90° abweichenden Winkel zur Umlaufrichtung des Riemens 21 verlaufen.

Die Früchte werden zwischen den beiden im Bereich des Durchganges 3e einander berührenden Riemen 20 und 21 in der beschriebenen Weise zum Platzen gebracht und gequetscht. Der Fruchtinhalt kann in die Aufnahmen 5e des Riemens 21 ausweichen und fällt dann hinter dem Durchgang 3 e aus den Aufnahmen 5e selbsttätig heraus.

Die Riemen 20, 21 bestehen aus einem solchen Material bzw. sind so straff gespannt, daß die Früchte zwischen den beiden Riemen in gleicher Weise gequetscht werden, wie es anhand der vorigen Ausführungsbeispiele erläutert worden ist.

Abweichend vom dargestellten Ausführungsbeispiel nach Fig. 7 können die Riemen 20 und 21 ebenfalls mit einer elastisch nachgiebigen Beschichtung versehen sein, wie dies für das Ausführungsbeispiel nach Fig. 6 anhand einer Quetschwalze beschrieben ist. Diese Beschichtung ist wiederum so hart, daß die Haut der Früchte und insbesondere deren Zellen im Durchgangsbereich 3e zwischen den beiden Riemen zerquetscht werden können. Dabei ist diese Beschichtung aber so elastisch, daß unregelmäßig dicke Fruchthäute bzw. -schalen durch den Durchgang 3e gefördert werden können und dabei auf die gesamten Fruchtschalen ein gleichmäßig hoher Druck ausgeübt wird.

Schließlich ist es auch möglich, auf einer glatten Umfangsfläche der Riemen einzelne Segmente zu befestigen, wie dies anhand der Fig. 5 für eine Quetschwalze beschrieben ist.

Der Riemen 20 kann auf seiner Mantelfläche 10e ebenfalls Profilteile aufweisen, welche die Früchte 14 erfassen und den Fruchtinhalt 16 in die Aufnahmen 5e des anderen Riemens 21 drücken. Dabei entspricht der Abstand dieser Profilteile in Umlaufrichtung des Riemens 20 dem Umfangsabstand der Aufnahmen 5e des anderen Riemens 21. Diese Profilteile können wiederum aus Metall, Kunststoff, Gummi oder einem anderen geeigneten Material bestehen.

Schließlich kann dem einen Riemen oder beiden Riemen 20 und 21 ein Abstreifer zugeordnet sein, um an den Riemen hängenbleibende Fruchtteile abzustreifen.

Das beschriebene Verfahren und die beschriebene Vorrichtung eignen sich insbesondere für die Herstellung von Wein, auch von Weißwein.

## Patentansprüche

1. Vorrichtung zum Zerkleinern von Früchten, insbesondere von Weintrauben, bei dem die Fruchtschale bzw. -haut (15) beim Durchgang zwischen Quetschteilen (1, 2) geöffnet wird, wobei die Früchte so gequetscht werden, daß die Fruchtschale bzw. -haut (15) gerade zum Platzen gebracht wird und der aus der Fruchtschale bzw. -haut (15) herausgetretene Fruchtinhalt (16) zumindest weitgehend ungequetscht in den Früchtebrei fällt, wobei die beiden Quetschteile (1, 2) angetrieben sind, zwischen denen die Früchte (14) hindurchführbar sind und von denen zumindest das eine Quetschteil (2) Festhalteabschnitte (8, 9) für die Fruchtschale bzw. -haut (15) sowie Aufnahmen (5) für den aus der Fruchtschale bzw. -haut (15) herausgedrückten Fruchtinhalt (16) aufweist,
dadurch gekennzeichnet, daß - damit beim Durchgang zwischen den Quetschteilen (1, 2) die aufgeplatzte Fruchtschale bzw. -haut (15) festgehalten und ihre Zellen zum Platzen gebracht werden - die Seitenwände (6, 7) der Aufnahmen (5) unter Bildung von Kanten (8, 9), welche die Festhalteabschnitte bilden, in die Mantelfläche (4) des Quetschteiles (2) übergehen, und die Anordnung so ist, daß beim Durchgang zwischen den Quetschteilen (1, 2) die Fruchtschale bzw. -haut (15) so stark zwischen gegenüberliegenden Mantelflächen der Quetschteile (1, 2) gepreßt wird, daß ihre Zellen platzen.

2. Vorrichtung nach Anspruch 1,
dadurch gekennzeichnet, daß die Aufnahme (5, 5e) rechteckigen Querschnitt haben.

3. Vorrichtung nach Anspruch 1,
dadurch gekennzeichnet, daß die Aufnahmen (5a; 5d; 5e) trapezförmigen Querschnitt haben.

4. Vorrichtung nach einem der Ansprüche 1 bis 3,
dadurch gekennzeichnet, daß das Quetschteil (1, 2; 20, 21) Aufnahmen unterschiedlicher Querschnittsform aufweist.

5. Vorrichtung nach einem der Ansprüche 1 bis 4,
dadurch gekennzeichnet, daß die Quetschteile (20, 21) endlos umlaufende Riemen sind.

6. Vorrichtung nach Anspruch 1 oder 4,
dadurch gekennzeichnet, daß die Aufnahmen (5c) durch Schlitze im Mantel (4c) des Quetschteiles (2c) gebildet sind.

7. Vorrichtung nach einem der Ansprüche 1 bis 4 oder 6,
dadurch gekennzeichnet, daß zumindest das eine, als Walze ausgebildete Quetschteil (1, 2) aus wenigstens einem Segmentträger (11) besteht, auf dem mit Abstand nebeneinander unter Bildung der Aufnahmen (5d) Mantelsegmente (12) befestigt sind.

8. Vorrichtung nach einem der Ansprüche 1 bis 7,
dadurch gekennzeichnet, daß auf zumindest einem der Quetschteile (1, 2; 20, 21) Profilteile vorgesehen sind, welche die Früchte (14) erfassen und den Fruchtinhalt (16) in die Aufnahmen (5; 5a; 5b; 5c; 5d; 5e) des anderen Quetschteiles drücken.

9. Vorrichtung nach Anspruch 8,
dadurch gekennzeichnet, daß der Abstand der aus Metall, Kunststoff, Gummi oder dergleichen bestehenden Profilteile in Umfangsrichtung der Quetschteile (1, 2; 20, 21) dem Umfangsabstand der Aufnahmen (5; 5a; 5b; 5c; 5d; 5e) des anderen Quetschteiles entspricht.

10. Vorrichtung nach einem der Ansprüche 1 bis 9,
dadurch gekennzeichnet, daß an zumindest einem Quetschteil (1, 2; 20, 21) unterhalb des Durchganges (3) für die Früchte (14) wenigstens ein Abstreifer (17) vorgesehen ist.

11. Vorrichtung nach einem der Ansprüche 1 bis 10,
dadurch gekennzeichnet, daß der Abstand zwischen benachbarten Aufnahmen (5; 5a; 5b; 5c; 5d; 5e) größer ist als der größte Durchmesser einer plattgedrückten Frucht (14).

12. Vorrichtung nach einem der Ansprüche 1 bis 11,
dadurch gekennzeichnet, daß das Fassungsvermögen der Aufnahmen (5; 5a; 5b; 5c; 5d; 5e) etwa der Menge des jeweils herausgedrückten Fruchtinhaltes (16) entspricht.

13. Vorrichtung nach einem der Ansprüche 1 bis 4 und 6 bis 12,
dadurch gekennzeichnet, daß zumindest das eine Walze ausgebildete Quetschteil (1, 2) gegenüber dem anderen, als Walze ausgebildeten Quetschteil zur Einstellung des Achsabstandes zwischen den beiden Quetschteilen verstellbar ist, und daß die beiden Quetschteile (1, 2) vorzugsweise gegensinnig antreibbar sind.

14. Vorrichtung nach einem der Ansprüche 1 bis 13,
dadurch gekennzeichnet, daß die Quetschteile (1, 2; 20, 21) im Arbeitsablauf hinter einem Entrapper angeordnet sind.

## Claims

1. A device for crushing fruit, in particular grapes, during which crushing the fruit skin (15) is broken open upon passing between squeezing parts (1, 2), the fruit being squeezed to an extent that the fruit skin (15) is only just caused to split and the fruit contents (16) issuing from the fruit skin (15) fall into the fruit pulp in an at least substantially unsqueezed state, the two squeezing parts (1, 2) being driven, the fruit (14) being able to be guided between these two squeezing parts (1, 2) and at least one squeezing part (2) having holding portions (8, 9) for the fruit skin (15) and receivers (5) for the fruit contents (16) pressed from the fruit skin (15), characterised in that - so that during passage between the squeezing parts (1, 2) the ruptured fruit skin (15) is held and its cells are caused to split - the lateral walls (6, 7) of the receivers (5) turn into the superficies (4) of the squeezing part (2) with the formation of edges (8, 9) which form the holding portions, and the arrangement is such that during passage between the squeezing parts (1, 2), the fruit skin (15) is pressed so strongly between opposite superficies of the squeezing parts (1, 2) that its cells split.

2. A device in accordance with Claim 1, characterised in that the receivers (5, 5e) have a rectangular cross-section.

3. A device in accordance with Claim 1, characterised in that the receivers (5a; 5d; 5e) have a trapezoidal cross-section.

4. A device in accordance with any one of Claims 1 to 3, characterised in that the squeezing part (1, 2; 20, 21) has receivers of varying cross-sectional shape.

5. A device in accordance with any one of Claims 1 to 4, characterised in that the squeezing parts (20, 21) are endlessly circulating belts.

6. A device in accordance with Claim 1 or 4, characterised in that the receivers (5c) are formed by grooves in the surface (4c) of the squeezing part (2c).

7. A device in accordance with any one of Claims 1 to 4 or 6, characterised in that at least one of the squeezing parts (1, 2) in the form of a roller is composed of at least one segment bearer (11) on which surface segments (12) are secured side by side at a distance from one another with the formation of the receivers (5d).

8. A device in accordance with any one of Claims 1 to 7, characterised in that shaped parts are provided on at least one of the squeezing parts (1, 2; 20, 21) and grip the fruit (14) and press the fruit contents (16) into the receivers (5; 5a; 5b; 5c; 5d; 5e) of the other squeezing part.

9. A device in accordance with Claim 8, characterised in that the spacing of the shaped parts - composed of metal, plastics, rubber or the like - in the circumferential direction of the squeezing parts (1, 2; 20, 21) corresponds to the circumferential spacing of the receivers (5; 5a; 5b; 5c; 5d; 5e) of the other squeezing part.

10. A device in accordance with any one of Claims 1 to 9, characterised in that at least one scraper (17) is provided on at least one squeezing part (1, 2; 20, 21), below the passage (3) for the fruit (14).

11. A device in accordance with any one of Claims 1 to 10, characterised in that the spacing between adjacent receivers (5; 5a; 5b; 5c; 5d; 5e) is greater than the maximum diameter of a flattened fruit (14).

12. A device in accordance with any one of Claims 1 to 11, characterised in that the capacity of the receivers (5; 5a; 5b; 5c; 5d; 5e) approximately corresponds to the quantity of the fruit contents (16) pressed out in each case.

13. A device in accordance with any one of Claims 1 to 4 and 6 to 12, characterised in that at least one of the squeezing parts (1, 2) in the form of a roller is movable in relation to the other squeezing part in the form of a roller for the purposes of adjusting the distance between the axes of the two squeezing parts, and in that the two squeezing parts (1, 2) are preferably driveable in opposite directions.

14. A device in accordance with any one of Claims 1 to 13, characterised in that the squeezing parts (1, 2; 20, 21) are, in the sequence of operations, arranged after a stalk removing device.

## Revendications

1. Dispositif pour broyer des fruits, en particulier des raisins, dans lequel la peau ou l'écorce (15) des fruits est ouverte au passage entre des éléments écraseurs (1, 2), les fruits étant écrasés de telle manière que la peau ou l'écorce (15) est juste éclatée, faisant tomber dans la purée de fruit la pulpe (16) du fruit qui s'en échappe pratiquement non broyée, les deux éléments écraseurs (1, 2) étant entraînés, éléments entre lesquels peuvent passer les fruits (14) et l'un au moins des éléments écraseurs présentant des sections de retenue (8, 9) de la peau ou l'écorce (15) des fruits ainsi que des logements (5) pour recevoir la pulpe (16) de fruit extraite de la peau ou l'écorce (15) des fruits, caractérisé en ce que - pour qu'au passage entre les éléments écraseurs (1, 2) la peau ou l'écorce (15) des fruits éclatée soit retenue et que leurs cellules soient amenées à éclater - les parois latérales (6, 7) des logements (5) se transforment en la surface enveloppe (4) de l'élément écraseur (2), en formant des arêtes (8, 9) qui composent les sections de retenue et en ce que le dispositif est tel qu'au passage entre les éléments écraseurs, la peau ou l'écorce (15) des fruits est pressée si fortement entre les surfaces enveloppe en via-à-vis des éléments écraseurs (1, 2) que ses cellules éclatent.

2. Dispositif selon la revendication 1, caractérisé en ce que les logements (5, 5e) ont une section rectangulaire.

3. Dispositif selon la revendication 1, caractérisé en ce que les logements (5a, 5d, 5e) ont une section trapézoïdale.

4. Dispositif selon l'une des revendications 1 à 3, caractérisé en ce que l'élément écraseur (1, 2; 20, 21) présente des logements dont la section a des formes différentes.

5. Dispositif selon l'une des revendications 1 à 4, caractérisé en ce que les éléments écraseurs (20, 21) sont des courroies sans fin en circulation.

6. Dispositif selon l'une des revendications 1 à 4, caractérisé en ce que les logements (5c) sont formés par des fentes dans l'enveloppe (4c) de l'élément écraseur (2c).

7. Dispositif selon l'une des revendications 1 à 4 ou 6, caractérisé en ce que l'un au moins des éléments écraseurs (1, 2), réalisé sous la forme un rouleau est composé d'au moins un porte-segment (11) sur lequel des segments d'enveloppe sont fixés à distance les à côté des autres pour former les logements (5d).

8. Dispositif selon l'une des revendications 1 à 7, caractérisé en ce que sur l'un au moins des éléments écraseurs (1, 2; 20, 21), il est prévu des profils qui saisissent les fruits (14) et pressent la pulpe (16) du fruit dans les logements (5; 5a; 5b; 5c; 5d; 5e) de l'autre élément écraseur.

9. Dispositif selon la revendication 8, caractérisé en ce que la distance entre les profils en métal, matière plastique, caoutchouc ou similaires correspond, en direction circonférentielle des éléments écraseurs (1, 2; 20, 21), à la distance circonférentielle entre les logements (5; 5a; 5b; 5c; 5d; 5e) de l'autre élément écraseur.

10. Dispositif selon l'une des revendications 1 à 9, caractérisé en ce que sur l'un au moins des éléments écraseurs (1, 2; 20, 21), il est prévu au moins un racleur (7) au-dessous du passage (3) pour les fruits (14).

11. Dispositif selon l'une des revendications 1 à 10, caractérisé en ce que la distance entre des logements voisins (5; 5a; 5b; 5c; 5d; 5e) est supérieure au plus grand diamètre d'un fruit (14) écrasé à plat.

12. Dispositif selon l'une des revendications 1 à 11, caractérisé en ce que la capacité des logements (5; 5a; 5b; 5c; 5d; 5e) correspond approximativement à la quantité de la pulpe (16) de fruit respectivement extraite.

13. Dispositif selon l'une des revendications 1 à 4 et 6 à 12, caractérisé en ce qu'au moins l'élément écraseur (1, 2) réalisé sous la forme d'un rouleau peut être réglé par rapport à l'autre élément écraseur réalisé sous la forme d'un rouleau pour ajuster l'entraxe entre les deux éléments écraseurs, et en ce que les deux éléments écraseurs (1, 2) peuvent de préférence être entraînés à sens inverse.

14. Dispositif selon l'une des revendications 1 à 13, caractérisé en ce que dans le déroulement du travail, les éléments écraseurs (1, 2; 20, 21) sont agencés derrière un égrappoir.
